# EUROPÄISCHE PATENTSCHRIFT

(11) **EP 1 943 898 B1**
(45) Veröffentlichungstag und Bekanntmachung des Hinweises auf die Patenterteilung: **02.11.2011**
(21) Anmeldenummer: 07100544.1
(22) Anmeldetag: 15.01.2007
(51) Int. Cl.: A01J 5/007, A01K 15/02

(54) **Verfahren zur individuellen Stimulation von Kühen zum Aufsuchen eines Melkstandes**
Method for individual stimulation of cows for locating a milking parlour
Procédé de stimulation individuelle de vaches destiné à chercher une salle de traite

(43) Veröffentlichungstag der Anmeldung: 16.07.2008
(73) Patentinhaber: Lemmer Fullwood GmbH, 53790 Lohmar (DE)
(72) Erfinder: Lemmer, Jan-Eric, 53790, Lohmar (DE)
(74) Vertreter: von Kreisler Selting Werner

(56) Entgegenhaltungen:
- DE-A1-102004 015 987
- DE-C1- 10 208 932
- US-A- 5 195 455
- US-A1- 2002 148 414

## Beschreibung

Die vorliegende Erfindung bezieht sich auf ein Verfahren und eine Vorrichtung zur individuellen Stimulation von Kühen zum Aufsuchen eines Melkstandes, wie z.B. aus DE-A-10 2004 015 987 und DE-C-102 08 932 bekannt.

Normalerweise werden Milchkühe in vorbestimmten zeitlichen Abständen, beispielsweise morgens und abends, gemolken. Dazu werden die Kühe zusammengetrieben und anschließend nacheinander manuell oder maschinell in einem Melkstand gemolken.

Untersuchungen ergaben, dass die pro Melkvorgang zu erzielende Milchmenge optimiert werden kann, wenn die zeitlichen Abstände, in denen die Milchkühe gemolken werden, an den individuellen Laktatlonszyklus, also an die zeitlich variablen Milchbildungsraten der einzelnen Kuh, angepasst werden. Dazu ist es erforderlich, den individuellen Laktationszyklus jeder Milchkuh datenmäßig zu erfassen und anhand der ermittelten Daten den optimalen Melkzeitpunkt für jede einzelne Kuh zu bestimmen. Als Grundlage der datenmäßigen Erfassung dient normalerweise die Milchmenge, die eine Kuh während eines Melkvorganges liefert. Diese Milchmenge wird erfasst und mit entsprechenden Erfahrungswerten verglichen, um auf diese Weise das derzeitige Stadium der Kuh innerhalb ihres Laktationszyklus zu bestimmen. Anhand dieser Daten lässt sich ein optimaler Zeitpunkt ermitteln, wann die betreffende Kuh das nächste Mal gemolken werden sollte bzw. wann die Kuh das nächste Mal einen sogenannten "Melkanspruch" hat. Die Aufnahme, Speicherung und Weiterverarbeitung kuhspezifischer Daten sowie die Bestimmung des individuellen Laktationszyklus und des Melkanspruches einer Kuh erfolgen normalerweise mit Hilfe sogenannter Herdenmanagementsysteme, die derzeit breite Anwendung finden.

Unter Berücksichtigung des individuellen Laktationszyklus einer Milchkuh kann demnach die kuhspezifische Milchproduktionsmenge optimiert werden, indem der Zeitpunkt des nächsten Melkanspruches jeder Kuh vorab bestimmt und jede einzelne Kuh zu dem ihr zugewiesenen Zeitpunkt gemolken wird. Das Melken kann manuell oder automatisch, beispielsweise mit Hilfe eines Melkroboters erfolgen.

Für den Viehzüchter bedeutet diese Vorgehensweise zur Optimierung der Milchproduktionsmenge allerdings einen nicht unerheblichen Mehraufwand, da er seine gesamte Herde nicht mehr, wie zuvor beschrieben, einfach morgens und abends zusammentreiben und in wahlloser Reihenfolge melken kann. Es muss vielmehr sichergestellt werden, dass die einzelnen Kühe immer dann gemolken werden, wenn sie tatsächlich einen Melkanspruch haben. Dies kann zu jeder Tageszeit der Fall sein.

Das bekannte Verfahren, die Kühe mittels akustischer Reize zu veranlassen, den Melkstand aufzusuchen (siehe DE-C-102 08 932), bereitet in der Praxis noch gewisse Probleme, da alle Kühe nicht gleichermaßen reagieren.

Die US-A-5,771,837 beschreibt eine automatische Kuhmelkvorrichtung, die eine mit einem zentralen Rechner verbundene Identlflzlerungseinrichtung zur Identifikation von Kühen umfasst. Die Identifizierungseinrichtung ist innerhalb eines nahe dem Melkstand gelegenen Geheges angeordnet, in dem die zu melkenden Kühe zusammengetrieben werden. Die Identifizierungseinrichtung identifiziert eine sich dem Melkstand nähernde Kuh anhand eines durch die Kuh mitgeführten Transponders und sendet ein entsprechendes Identlflzlerungssignal an den zentralen Rechner. Der zentrale Rechner stellt fest, ob die identifizierte Kuh einen Melkanspruch hat. Ist dies der Fall, so gibt der Rechner ein erstes Signal aus, was dazu führt, dass sich die entsprechende Kuh weiterhin dem Melkstand nähern und gemolken werden kann. Stellt der Rechner hingegen fest, dass die identifizierte Kuh keinen Melkanspruch hat, so wird ein zweites Signal ausgegeben, aufgrund dessen der Zugang der Kuh zum Melkstand verhindert wird. Gemäß einer in der US-A-5,771,837 beschriebenen bestimmten Ausführungsform weist das Gehege einen Durchgang mit einem Eingangstor, an dem die Identifizierungseinrichtung angeordnet ist, und zwei Ausgangstoren auf, wobei das erste Ausgangstor zum Melkstand und das zweite Ausgangstor vorbei an dem Melkstand zu einem weiteren Gehege führt. Eine sich durch das Eingangstor des Durchgangs bewegende Kuh wird durch die Identifizierungseinheit identifiziert und es wird ein entsprechendes Identifizierungssignal an den Rechner gesendet. Dieser stellt anhand des Identifizierungssignals fest, ob die identifizierte Kuh einen Melkanspruch hat. Ist dies der Fall, so wird durch den Rechner das erste Signal ausgegeben, das den vorhandenen Melkanspruch einer identifizierten Milchkuh anzeigt, woraufhin das erste Ausgangstor automatisch geöffnet wird, während das zweite Ausgangstor verschlossen bleibt. Auf diese Weise ist nur der Zugang zum Melkstand freigegeben, so dass die Kuh diesen aufsuchen und dort gemolken werden kann. Gibt der zentrale Rechner hingegen das zweite Signal aus, das anzeigt, dass die Kuh keinen Melkanspruch hat, so bleibt das erste Ausgangstor verschlossen, während das zweite Ausgangstor geöffnet wird. Die identifizierte Kuh wird somit automatisch in das weitere Gehege geleitet, ohne den Melkstand aufgesucht zu haben. Ein Nachteil der zuvor beschriebenen automatischen Kuhmelkvorrichtung besteht darin, dass die Kühe zu ihrer Identifikation zur Identifizierungseinrichtung getrieben werden müssen, um feststellen zu können, ob die Kuh einen Melkanspruch hat oder nicht. Hat die identifizierte Kuh keinen Melkanspruch, geht viel Zeit verloren, bis die Kuh das zweite Ausgangstor passiert hat und somit den Zugang zum Melkstand für die nächste Kuh freigegeben hat.

Die WO-A-98/10636 beschreibt ein System zum Erfassen der Anwesenheit von Tieren, zur Identifikation der erfassten Tiere und zur wahlweisen Stimulation der identifizierten Tiere. Das System umfasst eine Identifizierungseinrichtung zur Identifikation von Tieren, die sich innerhalb eines vorbestimmten Bereiches befinden. Die Identifizierungseinrichtung sendet ein entsprechendes Signal an einen zentralen Rechner, der bestimmt, ob sich das identifizierte Tier innerhalb des vorbestimmten Bereiches aufhalten darf. Ist dies nicht der Fall, so gibt der zentrale Rechner ein Signal aus, das einen von dem Tier mitgeführten Aktuator betätigt. Dieser Aktuator veranlasst das Tier durch die Ausübung eines unangenehmen Reizes, den vorbestimmten Bereich zu verlassen.

Es ist eine Aufgabe der vorliegenden Erfindung, ein Verfahren und ein System zur individuellen Stimulation von Kühen zu schaffen, welche die Kühe zuverlässig dazu veranlassen, zu einem vorbestimmten Zeitpunkt selbständig einen Melkstand aufzusuchen.

Diese Aufgabe wird gemäß der vorliegenden Erfindung durch ein Verfahren nach Anspruch 1 und durch ein System nach Anspruch 17 gelöst. Die abhängigen Ansprüche beziehen sich auf einzelne Weiterbildungen der vorliegenden Erfindung.

Ein erster Aspekt der vorliegenden Erfindung betrifft ein Verfahren zur individuellen Stimulation von Kühen zum Aufsuchen eines Melkstandes, das die Schritte aufweist: Bestimmen eines kuhspezifischen Melkzeitpunktes, zu dem eine bestimmte Kuh oder eine bestimmte Gruppe von Kühen gemolken werden soll; Ausgabe eines Signals an wenigstens einen Reize erzeugenden Aktuator, wobei ein spezifischer zeitlicher Zusammenhang zwischen dem Signalausgabezeitpunkt und dem Melkzeitpunkt besteht; und Ausüben eines kuhspezifischen Reizes auf die zu melkende Kuh durch den Aktuator als Antwort auf das empfangene Signal, wobei der Reiz die zu melkende Kuh/die Gruppe von zu melkenden Kühen dahingehend stimuliert, den Melkstand aufzusuchen.

Gemäß diesem Verfahren wird zunächst ein kuhspezifischer Melkzeitpunkt bestimmt, zu dem eine bestimmte Kuh gemolken werden soll. Der kuhspezifische Melkzeitpunkt kann willkürlich festgelegt oder auf andere Weise bestimmt werden, was nachfolgend noch näher erläutert wird. In einem nächsten Schritt des erfindungsgemäßen Verfahrens wird ein Signal an einen Reize erzeugenden Aktuator ausgegeben. Als Antwort auf das empfangene Signal wird ein (kuhspezifischer) akustischer Reiz auf die zu melkende Kuh ausgeübt. Hierzu wird erfindungsgemäß als akustischer Reiz das (Flug- o.dgl.) Geräusch eines Insekts, insbesondere der Dasselfliege (hypoderma bovis) erzeugt. Dieser akustische Reiz stimuliert die zu melkende Kuh derart, dass diese selbständig den Melkstand aufsucht. Neben der akustischen Stimulation können zusätzliche Lockmittel, wie beispielsweise Im Melkstand bereitgestelltes Futter, eingesetzt werden, um die Bereitschaft der Tiere, den Melkstand aufzusuchen, zu stelgem.

Ein wesentliches Merkmal der Erfindung ist darin zu sehen, dass zur Stimulation einer Kuh, den Melkstand aufzusuchen, ein die Kuh störender Reiz verwendet wird, wie er von einem Zweiflügler-Insekt und insbesondere einer Dasselfliege, vorzugsweise einer Hautdassel, erzeugt wird. Bei diesem Reiz handelt es sich um ein von dem Insekt ausgehendes Geräusch (z.B. Fluggeräusch). Der/die Reize des Insekts werden akustisch und/oder taktil nachgebildet und damit maschinell erzeugt.

Kühe reagieren "von Natur aus" auf Insektenreize. Sobald sie nach (Erst-)Ausübung des störenden Insektenreizes den Melkstand aufgesucht haben, wird die Reizausübung beendet, womit die Kühe im Lauf der Zeit (oder auch zuvor) lernen (bzw. gelernt haben), auf den Reiz in Form des Aufsuchens des Melkstandes zu reagieren.

Ein weiterer Vorteil des Verfahrens gemäß der vorliegenden Erfindung besteht darin, dass es nicht erforderlich ist, die zu melkenden Kühe zusammen zu treiben. Wenn eine Kuh oder eine bestimmte Gruppe von Kühen gemolken werden soll, so wird ein kuhspezifisches Signal ausgegeben, woraufhin die zu melkende Kuh oder die Gruppe zu melkender Kühe in Folge ihrer Stimulation selbständig den Melkstand aufsucht.

Es sollte klar sein, dass ein derartiges kuhspezifisches Signal nicht nur zum Melken der Kuh sondern auch zu anderen Anlässen ausgegeben werden kann, welche es erforderlich machen, dass die Kuh den Melkstand aufsucht. Als Beispiel sei hier eine medikamentöse Behandlung des Tieres genannt.

Die Stimulation einer Gruppe von zu melkenden Kühen kann durch Ausübung eines Gruppenreizes oder durch gleichzeitige oder aufeinanderfolgende Ausübung individueller Reize erfolgen.

Bei der Stimulation einer Gruppe von zu melkenden Kühen wird der von dem Aktuator ausgeübte Reiz auf alle Kühe der Gruppe ausgeübt. Dadurch wird die gesamte Gruppe dahingehend stimuliert, den Melkstand aufzusuchen.

Bei der individuellen Stimulation einzelner Kühe wird der durch den Aktuator ausgeübte Reiz nur auf eine einzelne Kuh ausgeübt, die auf diese Weise stimuliert wird und den Melkstand aufsucht.

Schließlich ist es auch möglich, dass sämtliche Kühe einer Gruppe wahlweise gemeinsam oder individuell stimuliert werden. Hierbei sind die Kühe dahingehend trainiert, dass jede Kuh auf mindestens zwei unterschiedliche Reizsignale reagiert. Während sich durch ein erstes Signal sämtliche Kühe der Gruppe angesprochen fühlen, werden die Kühe dieser Gruppe individuell durch unterschiedliche zweite Signale stimuliert.

Wie zuvor bereits erwähnt, kann der kuhspezifische Melkzeitpunkt willkürlich festgelegt oder auf andere Weise bestimmt werden. Im letzteren Falle ist es vorteilhaft, den kuhspezifischen Melkzeitpunkt anhand von gesammelten Kuhdaten, beispielsweise anhand von allgemeinen Laktationsdaten und/oder anhand von individuellen Laktationsdaten der einzelnen Kühe (einzelne Laktationszyklen, Lebenslaktationszyklus) zu bestimmen. Dabei greifen die allgemeinen Laktationsdaten auf gewonnene allgemeine Erkenntnisse in Bezug auf den aktuellen Laktationszyklus und/oder die zurückliegenden Laktationszyklen der Kühe zurück, während es sich bei den individuellen Laktationsdaten beispielsweise um die bei den letzten Melkvorgängen einer bestimmten Kuh erzielten Milchmengen, die elektrische Leitfähigkeit der Milch und dergleichen handelt.

Gemäss einer vorteilhaften Weiterbildung der vorliegenden Erfindung besteht ein spezifischer zeitlicher Zusammenhang zwischen dem Signalausgabezeitpunkt und dem Melkzeitpunkt. Der Signalausgabezeitpunkt kann mit dem kuhspezifischen Melkzeitpunkt zeitlich zusammenfallen. Die beiden Zeitpunkte können jedoch auch zeitlich voneinander getrennt sein. Beispielsweise ist es von Vorteil, dass die Signalausgabe eine vorbestimmte Zeitdauer vor dem kuhspezifischen Melkzeitpunkt erfolgt, um der zu melkenden Kuh ausreichend Zeit zu geben, von demjenigen Standort, an dem sich die Kuh zum Signalausgabezeitpunkt befindet, rechtzeitig zum Melkstand zu gelangen. Ist der Signalausgabezeitpunkt vom aktuellen Standort der Kuh abhängig, so muss dieser natürlich bekannt sein. Zur Erfassung des Standortes der Kuh können herkömmliche Standortbestimmungssysteme verwendet werden, wie beispielsweise Funkpeilvorrichtungen oder dergleichen.

Gemäß einer vorteilhaften Weiterbildung der vorliegenden Erfindung können auch für den Fall, dass sich mehrere der kuhspezifischen Melkzeitpunkte von Kühen überschneiden, vorbestimmte Prioritätsregelungen eingeführt und in Bezug auf die entsprechenden Signalausgabezeitpunkte berücksichtigt werden. Beispielsweise kann, wenn die spezifischen Melkzeitpunkte zweier Kühe zeitlich eng nebeneinander liegen, zuerst ein Signal an diejenige Kuh ausgegeben werden, die am weitesten von dem Melkstand entfernt ist. Weitere Kriterien, auf denen Prioritätsregelungen beruhen können, sind unter anderem die individuelle Milchabgabeleistung der einzelnen Kühe oder die Melkdauer, die zum Melken der jeweiligen Kuh erforderlich ist.

Vorteilhafterweise handelt es sich bei dem auf die zu melkende Kuh ausgeübten Reiz um eine Kombination des Insektenreizes mit einem optischen, elektrischen, olfaktorischen oder geschmacklichen Reiz. Bei dem optischen Reiz kann es sich beispielsweise um ein Licht oder ein Farbsignal handeln. Die akustischen Reize werden z.B, durch Lautsprecher erzeugt werden, die entweder von den Kühen mitgeführt oder ortsfest in der Nähe der Weide angeordnet sind. Wird der als Aktuator dienende Lautsprecher von der Kuh mitgeführt, so sollte sichergestellt sein, dass nur die den Lautsprecher tragende Kuh das Signal akustisch wahrnimmt. Ist der Lautsprecher hingegen ortsfest (z.B. nahe der Weide) angeordnet, könnten die Kühe derart trainiert sein, dass jede Kuh bzw. falls gewünscht eine Gruppe von Kühen durch ein ihr bzw. dieser Gruppe zugeordnetes Tonsignal stimuliert wird, um eine individuelle bzw. gruppenweise Stimulation der Kühe zu gewährleisten. Bei taktilen Reizen kann es sich beispielsweise um einen Vibrationsreiz handeln, der mit Hilfe einer Vibrationseinrichtung auf die Kuh ausgeübt wird. Derartige Vibrationseinrichtungen sind beispielsweise im Zusammenhang mit Mobilfunktelefonen hinreichend bekannt. Auch ist ein elektrischer Reiz denkbar, der beispielsweise mit Hilfe einer stromerzeugenden Einrichtung auf das Tier ausgeübt wird. Auch kann ein mechanischer Reiz als taktiler Reiz dienen. Hier kann beispielsweise über eine an dem Tier angeordnete Druckmanschette ein Druck auf die entsprechende Kuh ausgeübt werden. Zur Ausübung von olfaktorischen Reizen können Duftstoffe verwendet werden, die im Bedarfsfalle durch eine an oder nahe der Kuh angeordnete Einrichtung freigesetzt werden. Schließlich können über entsprechende Ausgabeeinrichtungen Aromastoffe freigesetzt werden, die den geschmacklichen Reiz der Kuh stimulieren. Es sollte klar sein, dass die zur Ausübung des entsprechenden Reizes erforderlichen Einrichtungen sowohl mit dem Tier mitgeführt als auch ortsfest angeordnet sein können. Wird die entsprechende Einrichtung von dem Tier mitgeführt, so kann diese außerhalb an der Kuh angeordnet sein oder mittels Inkorporation, wie beispielsweise Implantation, in der Kuh positioniert sein.

Gemäß einer vorteilhaften Weiterbildung der vorliegenden Erfindung ist die Intensität des auf die zu melkende Kuh ausgeübten Reizes veränderbar. Beispielsweise kann die Intensität des auf die zu melkende Kuh ausgeübten Reizes zu- oder abnehmen, je näher sich die zu melkende Kuh auf den Melkstand zu bewegt. Wird der auf das Tier ausgeübte Reiz von der Kuh in negativer Art und Auf und Weise wahrgenommen, kann beispielsweise die Verringerung der Reizintensität mit abnehmender Entfernung zum Melkstand eine zusätzliche Motivation darstellen, den Melkstand aufzusuchen. Auch kann die Reizintensität erhöht werden, sollte die Kuh schlecht oder zu langsam auf den zuvor ausgeübten Reiz reagieren, Schließlich kann das Training der zu melkenden Kuh, den Melkstand als Antwort auf den ausgeübten Reiz aufzusuchen, durch die Ausübung unterschiedlich starker Reize unterstützt werden, Das Training kann beispielsweise mit sehr starken Reizen beginnen, die im Verlauf des Trainings in Abhängigkeit vom Trainingszustand des Tieres reduziert werden.

Ferner ist es vorteilhaft, wenn ein weiterer Reiz, auf die Kuh ausgeübt wird, sobald diese im Melkstand gemolken wurde, so dass die gemolkene Kuh den Melkstand selbständig verlässt. Diesbezüglich wird insbesondere ein von der Kuh negativ wahrgenommener Reiz bevorzugt.

Vorteilhafterweise wird die den Melkstand aufsuchende Kuh durch eine geeignete Einrichtung automatisch erfasst und identifiziert. Somit ist es möglich, den Melkvorgang basierend auf den über die zu melkende Kuh vorliegenden kuhspezifischen Daten einzustellen. Beispielsweise kann die Melkdauer in Abhängigkeit von der in jüngster Vergangenheit produzierten oder einer prognostizierten Milchmenge eingestellt werden, um den Melkvorgang zeitlich zu optimieren.

Gemäß einer vorteilhaften Weiterbildung der vorliegenden Erfindung wird eine Kuh, die vor ihrem Melkzeitpunkt den Melkstand aufsucht, abgewiesen, um den Melkstand für Kühe, die einen Melkanspruch haben, freizuhalten. Die Abweisung kann beispielsweise durch Ausübung eines Reizes auf das Tier erfolgen, der die Kuh veranlasst, sich von dem Melkstand zu entfernen. Hier bieten sich beispielsweise Systeme mit einer Identifikationseinrichtung und einer Reizausgabeeinrichtung an. Bei derartigen Systemen wird eine Kuh, die einen vorbestimmten Bereich betritt, zuerst durch die Identifikationseinrichtung identifiziert. Dann wird abgefragt, ob die Kuh einen Melkanspruch hat. Sollte dies nicht der Fall sein, wird schließlich durch die Reizausgabeeinrichtung ein negativer Reiz auf das Tier ausgeübt, der dazu führt, dass die Kuh den vorbestimmten Bereich selbständig verlässt. Eine Reizausgabeeinrichtung der zuvor beschriebenen Art ist beispielsweise in der WO 98/10636 vorbeschrieben.

Vorteilhafterweise wird das durch den Melkvorgang erzielte Melkergebnis in Form von kuhspezifischen Daten abgespeichert, um diese Daten beispielsweise in einem Herdenmanagementsystem abzulegen. Insbesondere ist hier das erzielte Milchmengenvolumen zu nennen, mit dem der kuhspezifische Laktationszyklus aktualisiert werden kann. Auch kann der Wert der elektrischen Leitfähigkeit der Milch ermittelt und anschließend mit entsprechenden Werten verglichen werden, die bei vorangegangenen Melkvorgängen ermittelt wurden. Stärkere Änderungen der elektrischen Leitfähigkeit der Milch weisen gegebenenfalls auf mögliche Erkrankungen der Tiere hin. Sollte anhand der Änderung der elektrischen Leitfähigkeit eine Erkrankung einer Kuh diagnostiziert worden sein, so können entsprechende Medikamente verabreicht werden, wenn die betreffende Kuh den Melkstand aufsucht.

Ferner ist es vorteilhaft, dass automatisch eine Rückmeldung erfolgt, ob der kuhspezifische Reiz auf die zu melkende Kuh durch den Aktuator ausgeübt wurde. Sucht die Kuh den Melkstand nicht auf, obwohl eine Rückmeldung erfolgt ist, ist dies ein Zeichen dafür, dass die Kuh nicht ausreichend auf den durch den Aktuator ausgeübten Reiz reagiert, weshalb gegebenenfalls noch Trainingsbedarf besteht oder der auf diese bestimmte Kuh ausgeübte Reiz erhöht werden muss. Erfolgt keine Rückmeldung, sollte die Funktionsfähigkeit des Aktuators überprüft werden.

Ein weiterer Aspekt der vorliegenden Erfindung bezieht sich auf ein Melksystem zur Durchführung des erfindungsgemäßen Verfahrens, wobei das Melksystem einen Melkstand, einen Sender zur Ausgabe eines Aktivierungssignals und einen Aktuator zum Ausüben eines Reizes auf eine zu melkende Kuh bei Empfang des Aktivierungssignals umfasst.

Vorteilhafterweise weist das System eine Datenspeicher- und Datenverarbeitungseinheit zum Speichern und Verarbeiten kuhspezifischer Daten auf. Auf diese Weise können die während des Melkvorganges ermittelten Daten direkt in einem Herdenmanagementprogramm abgelegt und entsprechend weiterverarbeitet werden.

Der Aktuator ist vorteilhafterweise an oder in der Kuh angeordnet, um auszuschließen, dass der auf die zu melkende Kuh ausgeübte kuhspezifische Reiz auch andere Kühe stimuliert. Der Aktuator kann beispielsweise mit einem Halteband am Hals, am Schwanz oder an einem Bein des Tieres angeordnet werden. Auch kann der Aktuator an der normalerweise bereits vorhandenen Ohrmarkierung der Kuh befestigt werden. Ferner besteht die Möglichkeit, dem Tier den Aktuator zu implantieren oder wie einen Bolus zu applizieren. Ein Bolus ist ein magnetischer Gegenstand, der verhindern soll, dass kleine metallische Gegenstände wie beispielsweise Nägel oder dergleichen, welche die Kuh ungewollt mit der Nahrung zu sich nimmt, durch den Magen- und Darmtrakt der Kuh hindurch gelangen. Der Bolus wird im Vormagen der Kuh positioniert, wo er aufgrund seiner Schwerkraft verbleibt und somit nicht über den weiteren Magen- und Darmtrakt der Kuh ausgeschieden werden kann. Ein derartiger magnetischer Bolus kann nun vorteilhafterweise um einen Aktuator ergänzt werden, um auf eine Kuh einen kuhspezifischen Reiz ausüben zu können. Man kann jedoch auch auf die reine magnetische Funktion eines Bolus verzichten, also den Aktuator wie einen Bolus applizieren.

Ferner weist das Melksystem gemäß einer vorteilhaften Weiterbildung der vorliegenden Erfindung eine Erfassungseinrichtung zum Erfassen der Anwesenheit einer Kuh in dem Melkstand auf. Vorteilhafterweise ist ferner eine Identifizierungseinrichtung zur Identifikation einer den Melkstand aufsuchenden Kuh vorgesehen. Auf diese Weise kann die den Melkstand betretende Kuh erfasst und identifiziert werden, wodurch sowohl eine Automatisierung des Melkvorganges als auch die Zuordnung der ermittelten kuhspezifischen Daten zu der entsprechenden Kuh ermöglicht werden. Die Erfassungs- und Identifizierungseinrichtung können dabei eine Einheit bilden.

Schließlich ist es vorteilhaft, dass das Melksystem gemäß der vorliegenden Erfindung eine Lokalisierungseinrichtung, beispielsweise eine Peilfunkeinrichtung oder dergleichen zum Lokalisieren des Standortes einer zu melkenden Kuh aufweist. Die auf diese Weise ermittelten Standortdaten der Kuh können beispielsweise zur Bestimmung des Signalausgabezeitpunktes oder zur Regelung der Reizintensität verwendet werden.

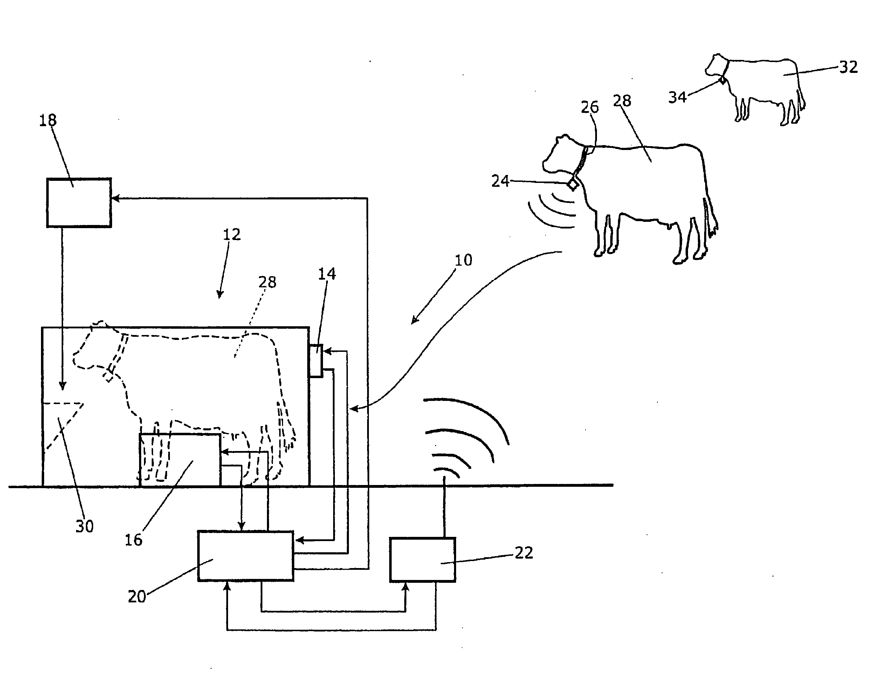

Nachfolgend wird eine bevorzugte Ausführungsform des Melksystems gemäß der vorliegenden Erfindung unter Bezugnahme auf die beiliegende Zeichnung beschrieben. Diese zeigt eine schematische Ansicht einer bevorzugten Ausführungsform des Melksystems gemäß der vorliegenden Erfindung.

Die Zeichnung zeigt ein automatisches Melksystem 10, das eine bevorzugte Ausführungsform der vorliegenden Erfindung verkörpert. Das automatische Melksystem 10 umfasst einen herkömmlichen Melkstand 12, bei dem es sich um eine einzelne Kuhbox oder auch um eine Kuhbox innerhalb eines Meikkarussells handeln kann. An dem Melkstand sind eine Identifizierungseinrichtung 14, eine automatische Melkeinrichtung 16 und eine automatische Futterzufuhreinrichtung 18 angeordnet. Der Aufbau der Einrichtungen 14,16 und 18 ist an sich bekannt und in der Zeichnung deshalb nur schematisch dargestellt. Die Identifzierungseinrichtung 14, die automatische Melkeinrichtung 16 und die automatische Futterzufuhreinrichtung 18 sind jeweils mit einem zentralen Rechner 20 verbunden, der eine Datenspeicher- und Datenverarbeitungseinheit zum Speichern und Verarbeiten kuhspezifischer Daten umfasst. Ferner ist ein Sender 22 mit dem zentralen Rechner 20 verbunden, der als Antwort auf ein vom zentralen Rechner 20 ausgegebenes Befehissignal ein Signal an einen Aktuator 24 aussendet, wodurch dieser betätigt wird. Der Aktuator 24 ist mit Hilfe eines Halsbandes 26 an einer Kuh 28 befestigt und wird von dieser mitgeführt.

Der zentrale Rechner 20 dient zum Speichern, Verarbeiten und Verwalten von allgemeinen und kuhspezifischen Daten, die einerseits manuell in den zentralen Rechner 20 eingegeben und andererseits von externen Einrichtungen an den zentralen Rechner gesendet werden können. Mit dem zentralen Rechner 20 kann somit ein integriertes Kuhherdenmanagementsystem realisiert werden, mit dem Daten über die Historie der einzelnen Tiere, beispielsweise hinsichtlich der Stammdaten der einzelnen Kühe, der individuellen Fütterung, des Melkzyklus etc., verwaltet, ausgewertet und weiterverarbeitet werden können.

Anhand der vorliegenden allgemeinen und kuhspezifischen Laktationsdaten berechnet der zentrale Rechner 20 unter anderem einen kuhspezifischen Melkzeitpunkt für jede Kuh der Herde, zu dem die betreffende Kuh einen Melkanspruch hat und gemolken werden soll, um ein optimales Melkergebnis zu erzielen.

Hat der zentrale Rechner beispielsweise einen spezifischen Melkzeitpunkt für die in der Zeichnung mit der Bezugsziffer 28 gekennzeichnete Kuh bestimmt, die auf der Weide steht, so gibt er ein Befehlssignal an den Sender 22 aus, woraufhin dieser ein Signal aussendet. Als Antwort auf das von dem Sender 22 gesendete Signal wird der Aktuator 24 der Kuh 28 betätigt, der die Kuh 28 durch (akustische) Wiedergabe des (Flug-)Geräusches einer (Haut-)Dasselfliege stimuliert. Die Kuh 28, die dahingehend trainiert ist, sich bei Stimulation durch den Aktuator 24 zum Melkstand 12 zu bewegen, läuft selbständig zum Melkstand 12. Dort angekommen, wird die Kuh 28 beim Eintreten in den Melkstand 12 durch die am Eingang des Melkstandes 12 angeordnete Identifizierungseinrichtung 14 identifiziert, indem die Identifizierungseinrichtung 14 mit einem von der Kuh 28 mitgeführten, nicht dargestellten Transponder interagiert. Nachdem die in dem Melkstand stehende Kuh identifiziert wurde, sendet die Identifizierungseinrichtung 14 ein entsprechendes Signal an den zentralen Rechner 20. Der zentrale Rechner 20 verarbeitet das empfangene Signal und überprüft, ob es sich bei derjenigen Kuh, die den Melkstand 12 betreten hat, um die Kuh 28 handelt, also um diejenige Kuh, die einen Melkanspruch hat und die als Antwort auf das Aussenden des Signals durch den Sender 22 mit Hilfe des Aktuators 24 stimuliert wurde. Ist dies nicht der Fall, wird die Kuh manuell oder auf andere Weise aus dem Melkstand getrieben. Ist dies hingegen der Fall, sendet der zentrale Rechner 20 spezifische Befehlssignale, die auf den in dem zentralen Rechner 20 gespeicherten spezifischen Kuhdaten der Kuh 28 basieren, an die automatische Melkeinrichtung 16 und an die automatische Futterzuführeinrichtung 18. Als Antwort auf das an die automatische Melkeinrichtung 16 gesendete spezifische Befehlssignal wird ein auf die Kuh 28 abgestimmtes Melkprogramm gestartet und die Kuh 28 gemolken. Als Antwort auf das an die automatische Futterzufuhreinrichtung 18 gesendete Signal füllt diese eine kuhspezifische Futtermenge und/oder eine kuhspezifische Futtermischung in den innerhalb des Melkstandes 12 angeordneten Trog 30. Die Futtermischung kann auch medikamentöse Zusätze enthalten, sollten im zentralen Rechner kuhspezifische Daten gespeichert sein, die auf eine entsprechende Behandlung des Tieres verweisen.

Die von der automatischen Melkeinrichtung gemolkene Milchmenge der Kuh 28 wird erfasst und die entsprechenden Ergebniswerte an den zentralen Rechner 20 übertragen. Dieser speichert die empfangenen Werte, aktualisiert die Tierdatenhistorie anhand dieser neuen Werte und berechnet den nächsten Melkanspruch, also den nächsten Melkzeitpunkt.

Anschließend verlässt die Kuh 28 den Melkstand 12.

Ist der nächste Melkzeitpunkt erreicht, so wird der Aktuator 24 erneut betätigt, so dass sich der zuvor beschriebene Vorgang wiederholt.

Der Sender 22 kann unterschiedliche Signale, beispielsweise Signale unterschiedlicher Frequenzen, ausgeben, wobei jeder Aktuator einem bestimmten Signal zugeordnet ist. Auf diese Weise wird sichergestellt, dass bei einem ersten Signal beispielsweise nur der Aktuator 24 der Kuh 28 betätigt wird, während keine Stimulation der Kuh 32 durch den Aktuator 34 erfolgt. Somit können die Kühe 28,32 individuell dahingehend stimuliert werden, den Melkstand 12 aufzusuchen.

Ferner sei darauf hingewiesen, dass ein spezifischer zeitlicher Zusammenhang zwischen dem von dem zentralen Rechner 20 bestimmten Melkzeitpunkt und dem Signalausgabezeitpunkt durch den Sender 22 besteht. Vorzugsweise erfolgt die Ausgabe des Signals durch den Sender 22 vor dem Melkzeitpunkt, um derjenigen Kuh, die einen Melkanspruch hat, ausreichend Zeit zu geben, von der Weide zum Melkstand 12 zu gelangen. Auch können bei dem zuvor genannten spezifischen zeitlichen Zusammenhang zwischen dem Melkzeitpunkt und dem Signalausgabezeitpunkt spezifische Prioritätsregelungen berücksichtigt werden. Haben beispielsweise zwei Kühe gleichzeitig einen Melkanspruch, so kann zuerst ein Signal an diejenige Kuh gesendet werden, die weiter von dem Melkstand beabstandet ist. Hierzu sind entsprechende Einrichtungen erforderlich, welche zur Bestimmung der Position der einzelnen Kühe geeignet sind.

Ferner wird das von dem Sender 22 an den Aktuator 24,34 abgesandte Signal von dem Aktuator 24,34 quittiert, das heißt der Aktuator 24,34 sendet bei seiner Betätigung ein entsprechendes Bestätigungssignal an den Sender 22 oder an eine andere mit dem zentralen Rechner 20 verbundene Einrichtung zurück, um die Betätigung des Aktuators rückzumelden. Der Empfang oder der Nichtempfang des Bestätigungssignals durch den Sender 22 wird dem zentralen Rechner 20 gemeldet. Dieser gibt ein Alarmsignal aus, sollte der Sender 22 kein Bestätigungssignal von dem entsprechenden Aktuator 24,34 erhalten haben, um den Benutzer darauf aufmerksam zu machen, dass die Funktionsfähigkeit des Aktuators überprüft werden muss. Ferner gibt der zentrale Rechner 20 ein Alarmsignal aus, wenn der Sender 22 zwar ein Bestätigungssignal empfangen hat, sich die entsprechende Kuh 28,32 jedoch nicht innerhalb eines vorbestimmten Zeitraumes beim Melkstand 12 einfindet, was darauf schließen lässt, dass die Kuh 28,32 nicht genug dahingehend trainiert wurde, den Melkstand bei Stimulation durch den entsprechenden Aktuator 24,34 aufzusuchen, oder dass andere Vorkommnisse die Kuh daran hindern, den Melkstand 12 aufzusuchen.

## Patentansprüche

1. Verfahren zur individuellen Stimulation von Kühen (28;32) zum Aufsuchen eines Melkstandes (12), das die Schritte aufweist:
Bestimmen eines kuhspezifischen Melkzeitpunktes, zu dem eine bestimmte Kuh (28;32) oder eine bestimmte Gruppe von Kühen gemolken werden soll,
Ausgabe eines Signals an wenigstens einen Reize erzeugenden Aktuator (24;34), und
- Ausüben eines Reizes auf die zu melkende Kuh (28;32) durch den Aktuator (24;34) als Antwort auf das empfangene Signal, wobei der Reiz die zu melkende Kuh (28;32) oder die Gruppe von zu melkenden Kühen dahingehend stimuliert, den Melkstand (12) aufzusuchen **dadurch gekennzeichnet,**
- **dass** als Reiz der von einem Insekt erzeugte Reiz gewählt wird, und
- **dass** es sich bei dem von dem Insekt erzeugten Reiz um ein von dem Insekt erzeugtes Geräusch, insbesondere Fluggeräusch, oder einen von dem Insekt erzeugten taktilen Reiz handelt,
- wobei es sich bei dem Insekt um einen Zweiflügler handelt.

2. Verfahren nach Anspruch 1, **dadurch gekennzeichnet, dass** der Zweiflügler eine Dasselfliege ist.

3. Verfahren nach Anspruch 2, **dadurch gekennzeichnet, dass** die Dasselfliege eine Hautdasselfliege (hypoderma bovis) ist.

4. Verfahren nach einem der vorhergehenden Ansprüche, **dadurch gekennzeichnet, dass** der kuhspezifische Melkzeitpunkt anhand von gesammelten Kuhdaten in Bezug auf die individuellen Kühe (28;32) bestimmt wird.

5. Verfahren nach einem der vorhergehenden Ansprüche, **dadurch gekennzeichnet, dass** der Aktuator (24;34) von der Kuh (28;32) mitgeführt wird.

6. Verfahren nach einem der vorhergehenden Ansprüche, **dadurch gekennzeichnet, dass** es sich bei dem auf die zu melkende Kuh (28;32) ausgeübten Reiz um eine Kombination aus dem von dem Insekt erzeugten Reiz und einem optischen, elektrischen, olfaktorischen oder geschmacklichen Reiz handelt.

7. Verfahren nach einem der vorhergehenden Ansprüche, **dadurch gekennzeichnet, dass** die Intensität und/oder Dauer des auf die zu melkende Kuh (28;32) ausgeübten Reizes veränderbar, insbesondere steigerbar bzw. verlängerbar ist.

8. Verfahren nach Anspruch 7, **dadurch gekennzeichnet, dass** die Intensität und/oder Dauer des auf die zu melkende Kuh (28;32) ausgeübten Reizes in Abhängigkeit von der Entfernung der zu melkenden Kuh (28;32) von dem Melkstand (12) zu- oder abnimmt.

9. Verfahren nach einem der vorhergehenden Ansprüche, **dadurch gekennzeichnet, dass** ein weiterer Reiz auf die Kuh (28;32) ausgeübt wird, sobald diese in dem Melkstand (12) gemolken wurde.

10. Verfahren nach einem der vorhergehenden Ansprüche, **dadurch gekennzeichnet, dass** die den Melkstand (12) aufsuchende Kuh (28;32) erfasst und identifiziert wird.

11. Verfahren nach einem der vorhergehenden Ansprüche, **dadurch gekennzeichnet, dass** eine Kuh (28;32), die vor ihrem Melkzeitpunkt den Melkstand (12) aufsucht, abgewiesen wird.

12. Verfahren nach einem der vorhergehenden Ansprüche, **dadurch gekennzeichnet, dass** das durch den Melkvorgang erzielte Melkergebnis in Form von kuhspezifischen Daten abgespeichert wird.

13. Verfahren nach einem der vorhergehenden Ansprüche, **dadurch gekennzeichnet, dass** automatisch eine Rückmeldung erfolgt, ob der kuhspezifische Reiz auf die zu melkende Kuh (28;32) durch den Aktuator (24;34) ausgeübt wurde.

14. Verfahren nach Anspruch 13, **dadurch gekennzeichnet, dass** ein Alarm ausgelöst wird, wenn kein Reiz durch den Aktuator (24;34) ausgelöst wurde und/oder wenn keine Rückmeldung erfolgt ist.

15. Verfahren nach einem der vorhergehenden Ansprüche, **dadurch gekennzeichnet, dass** ein spezifischer zeitlicher Zusammenhang zwischen dem Signalausgabezeitpunkt und dem Melkzeitpunkt besteht.

16. Verfahren nach Anspruch 15, **dadurch gekennzeichnet, dass**, sollten sich die bestimmten kuhspezifischen Melkzeitpunkte einzelner Kühe (28;32) überschneiden, vorbestimmte Prioritätsregelungen in Bezug auf die entsprechenden Signalausgabezeitpunkte berücksichtigt werden.

17. Melksystem (10) zur Durchführung eines Verfahrens nach einem der vorhergehenden Ansprüche, wobei das Melksystem (10) aufweist:
- einen Melkstand (12),
- einen Sender (22) zur Ausgabe eines Aktivierungssignals und
- einen Aktuator (24;34) zum Ausüben eines von einem Zweiflügler-Insekt ausgeübten Reizes auf eine zu melkende Kuh (28;32) bei Empfang des Aktivierungssignals.

18. System (10) nach Anspruch 17, **dadurch gekennzeichnet, dass** es eine Datenspeicher- und Datenverarbeitungseinheit (20) zum Speichern und Verarbeiten kuhspezifischer Daten aufweist.

19. System (10) nach einem der Ansprüche 17 oder 18, **dadurch gekennzeichnet, dass** der Aktuator (24; 34) an oder in der Kuh (28; 32) angeordnet ist.

## Claims

1. A method for the individual stimulation of cows (28; 32) to visit a milking parlor (12), said method comprising the following steps:
- determining a cow-specific milking time at which a certain cow (28; 32) or a certain group of cows is to be milked,
- emitting a signal to at least one actuator (24; 34) generating stimuli, and
- using the actuator (24; 34) to stimulate the cow (28; 32) to be milked in response to the signal received, the stimulus stimulating the cow (28; 32) to be milked or the group of cows to be milked to visit the milking parlor (12),
**characterized in**
- **that** the stimulus used is the stimulus provided by an insect; and
- **that** the stimulus provided by the insect is a sound made by said insect, in particular a buzzing, or a tactile stimulus provided by said insect,
- the insect being a dipteran.

2. The method of claim 1, **characterized in that** the dipteran is a botfly.

3. The method of claim 2, **characterized in that** the botfly is a warble fly (hypoderma bovis).

4. The method of one of the preceding claims, **characterized in that** the cow-specific milking time is determined for each individual cow (28; 32) on the basis of cow data gathered.

5. The method of one of the preceding claims, **characterized in that** the actuator (24; 34) is carried by the cow (28; 32).

6. The method of one of the preceding claims, **characterized in that** the stimulus provided to the cow to be milked (28; 32) is a combination of the stimulus provided by an insect and an optical, electrical, olfactory or taste stimulus.

7. The method of one of the preceding claims, **characterized in that** the intensity and/or the duration of the stimulus provided to the cow (28; 32) to be milked is variable, in particular increasable or extendable.

8. The method of claim 7, **characterized in that** the intensity and/or the duration of the stimulus provided to a cow (28; 32) to be milked increases or decreases as a function of the distance between the cow (28; 32) to be milked and the milking parlor (12).

9. The method of one of the preceding claims, **characterized in that** a further stimulus is provided to the cow (28; 32) as soon as the same has been milked in the milking parlor (12).

10. The method of one of the preceding claims, **characterized in that** the cow (28; 32) visiting the milking parlor (12) is detected and identified.

11. The method of one of the preceding claims, **characterized in that** a cow (28; 32) visiting the milking parlor (12) before its milking time, is rejected.

12. The method of one of the preceding claims, **characterized in that** the milking result obtained by the milking process is stored as cow-specific data.

13. The method of one of the preceding claims, **characterized in that** an automatic feedback is provided on whether the cow-specific stimulus to the cow (28; 32) to be milked has been provided by the actuator (24; 34).

14. The method of claim 13, **characterized in that** an alarm is triggered if no stimulus has been provided by the actuator (24; 34) and/or if no feedback has been provided.

15. The method of one of the preceding claims, **characterized in that** a specific temporal relation exists between the signal output time and the milking time.

16. The method of claim 15, **characterized in that**, if the determined cow-specific milking times of individual cows (28; 32) overlap, predetermined priority regulations regarding the corresponding signal output times are observed.

17. A milking system (10) for executing a method of one of the preceding claims, the milking systems (10) comprising:
- a milking parlor (12);
- a transmitter (22) for outputting an activation signal, and
- an actuator (24; 34) which, upon receipt of the activation signal, provides a stimulus to a cow (28; 32) to be milked that is provided by a dipteran insect.

18. The system of claim 17, **characterized in that** it comprises a data storage and data processing unit (20) for storing and processing cow-specific data.

19. The system of one of claims 17 or 18, **characterized in that** the actuator (24; 24) is arranged on or in the cow (28; 32).

## Revendications

1. Procédé de stimulation individuelle de vaches (28; 32) destiné à les faire chercher une salle de traite (12), le procédé comprenant les étapes suivantes:
- déterminer un temps de traite spécifique pour une vache auquel une vache (28; 32) spécifique ou un groupe de vaches spécifique est destiné à être trait,
- faire sortir un signal à au moins un actionneur (24; 34) qui produit des stimulations, et
- exercer une stimulation sur la vache (28; 32) à traire par ledit actionneur (24; 34) en réaction sur le signal reçu, la stimulation stimulant la vache (28; 32) à traire ou le groupe de vaches á traire à chercher la salle à traire (12),
**caractérisé en ce que**
- la stimulation choisie est la stimulation produite par un insecte, et
- la stimulation produite par un insecte est un bruit généré par ledit insecte, notamment un bruit de vol, ou une stimulation tactile produite par ledit insecte,
- ledit insecte est un diptère.

2. Procédé selon la revendication 1, **caractérisé en ce que** le diptère est un oestre.

3. Procédé selon la revendication 2, **caractérisé en ce que** ledit oestre est un oestre du type hypoderma bovis.

4. Procédé selon l'une quelconque des revendications précédentes, **caractérisé en ce que** le temps de traite spécifique pour une vache est déterminé pour chaque vache individuelle (28; 32) sur base de données de vaches collectées.

5. Procédé selon l'une quelconque des revendications précédentes, **caractérisé en ce que** ledit actionneur (24; 34) est porté sur la vache (28; 32).

6. Procédé selon l'une quelconque des revendications précédentes, **caractérisé en ce que** ladite stimulation exercée sur la vache (28; 32) à traire est une combinaison d'une stimulation produite par ledit insecte et d'une stimulation optique, électrique, olfactive ou aromatique.

7. Procédé selon l'une quelconque des revendications précédentes, **caractérisé en ce que** l'intensité et/ou la durée de la stimulation exercée sur une vache (28; 32) à traire est variable, notamment intensifiable ou allongeable.

8. Procédé selon la revendication 7, **caractérisé en ce que** l'intensité et/ou la durée de la stimulation exercée sur la vache (28; 32) à traire augmente ou diminue en fonction de la distance entre la vache (28; 32) à traire et ladite salle de traite (12).

9. Procédé selon l'une quelconque des revendications précédentes, **caractérisé en ce qu'**une stimulation de plus est exercée sur la vache (28; 32) dès que la vache a été traite dans la salle de traite (12).

10. Procédé selon l'une quelconque des revendications précédentes, **caractérisé en ce que** la vache (28; 32) cherchant la salle de traite (12) est détectée et identifiée.

11. Procédé selon l'une quelconque des revendications précédentes, **caractérisé en ce qu'**une vache (28; 32) qui cherche la salle de traite (12) avant son temps de traite est renvoyée.

12. Procédé selon l'une quelconque des revendications précédentes, **caractérisé en ce que** le résultat de traite obtenu par la traite est stocké comme données spécifiques pour la vache respective.

13. Procédé selon l'une quelconque des revendications précédentes, **caractérisé en ce qu'**une information de retour est faite sortir automatiquement indiquant si la stimulation spécifique pour une vache a été exercée par l'actionneur (24; 34) sur la vache (28; 32) à traire.

14. Procédé selon la revendication 13, **caractérisé en ce qu'**un alarme est déclenché si aucune stimulation n'a été exercée par l'actionneur (24; 34) et/ou si aucune information de retour n'a été faite sortir.

15. Procédé selon l'une quelconque des revendications précédentes, **caractérisé en ce qu'**une relation temporelle spécifique existe entre le temps de sortie du signal et le temps de traite.

16. Procédé selon la revendication 15, **caractérisé en ce qu'**au cas les temps de traite déterminés et spécifiques pour les vaches se chevauchent, on prend en considération des régimes de priorité prédéterminés regardant les temps de sortie du signal correspondants.

17. Système de traite (10) destiné à exécuter un procédé selon l'une quelconque des revendications précédentes, le système de traite (10) comprenant:
- une salle de traite (12);
- un émetteur (22) pour émettre un signal d'activation, et
- un actionneur (24; 34) qui, lors de la réception dudit signal d'activation, exerce une stimulation produite par un insecte diptère sur une vache (28; 32) à traire.

18. Système (10) selon la revendication 17, **caractérisé en ce que** qu'il comprend une unité de stockage et de traitement de données (20) pour stocker et traiter des données spécifiques pou les vaches.

19. Système (10) selon les revendications 17 ou 18, **caractérisé en ce que** ledit actionneur (24; 34) est disposé sur ou dans la vache (28; 32).
